# EUROPÄISCHE PATENTANMELDUNG

(11) **EP 2 868 890 A1**
(43) Veröffentlichungstag der Anmeldung: **06.05.2015**
(21) Anmeldenummer: 13191151.3
(22) Anmeldetag: 31.10.2013
(51) Int. Cl.: F02B 25/04, F02B 29/04, F02M 21/02, F02M 21/06, F02D 19/06, F02D 19/10

(54) **Kühleinrichtung und Kühlverfahren für eine Hubkolbenbrennkraftmaschine**

(71) Anmelder: Wärtsilä Schweiz AG, 8401 Winterthur (CH)
(72) Erfinder: Priftis, Konstantinos, 8404 Winterthur (CH); Ott, Marcel, 8406 Winterthur (CH); Nylund, Ingemar, 66580 Kuni (FI)
(74) Vertreter: Intellectual Property Services GmbH

(57) **Zusammenfassung**

Die Erfindung betrifft eine Kühleinrichtung (1) für eine Hubkolbenbrennkraftmaschine (2). Die Hubkolbenbrennkraftmaschine (2) ist geeignet zum Betrieb mit zumindest einem Gas. Die Kühleinrichtung (1) umfasst einen Tank (3) für Flüssigerdgas (12). Zudem umfasst die Kühleinrichtung eine Pumpe (4) zum Fördern des Flüssigerdgases (12) aus dem Tank (3). Die Kühleinrichtung (1) umfasst einen ersten Wärmetauscher (5), in den das Flüssigerdgas (12) und ein Kühlfluid förderbar sind. In dem ersten Wärmetauscher (5) ist das Kühlfluid zum Kühlen der Hubkolbenbrennkraftmaschine mittels des verflüssigten Gases abkühlbar. Das Flüssigerdgas (12) ist auf eine Zufuhrtemperatur mittels des Kühlfluids erwärmbar, derart, dass das Flüssigerdgas (12) in das zumindest eine Gas umwandelbar und in die Hubkolbenbrennkraftmaschine förderbar ist.

## Beschreibung

Die Erfindung betrifft eine Kühleinrichtung, eine
Hubkolbenbrennkraftmaschine, ein Schiff und ein Kühlverfahren zur Kühlung zumindest eines Treibstoffbestandteils der Hubkolbenbrennkraftmaschine gemäss dem Oberbegriff der unabhängigen Ansprüche.

Hubkolbenbrennkraftmaschinen wie beispielsweise Gasmotoren oder auch Grossdieselmotoren werden häufig als Antriebsaggregate unter anderem für Schiffe verwendet oder auch im stationären Betrieb, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit Brenn- und Betriebsstoffen zentrale Kriterien für den Betrieb der Maschinen.

Aus der WO 2012/026828 A1 ist es bekannt, ein Schiff unter Verwendung von Flüssigerdgas, welches häufig auch als LNG (Liquified Natural Gas) bezeichnet wird, anzutreiben. Um das Flüssigerdgas für die Verwendung aufzuwärmen oder zu verdampfen, wird vorgeschlagen, auf Schiffen mit einem Speicher für ein zweites verflüssigtes Gas mit einer höheren Verdampfungstemperatur als das Flüssigerdgas einen Verdampfungsverlust vom zweiten verflüssigten Gas zu verwenden, um das Flüssigerdgas aufzuwärmen und den Verdampfungsverlust dabei wieder zu verflüssigen. Dieser vorbekannte Stand der Technik führt auf derartigen Schiffen bereits zu einem wirtschaftlicheren Umgang mit den Brenn- und Betriebsstoffen. Da jedoch nicht überall ein derartiges zweites verflüssigtes Gas mit der entsprechenden Verdampfungstemperatur zur Verfügung steht, kann mit dem vorbekannten Stand der Technik nicht überall ein wirtschaftlicherer Umgang mit den Brenn- und Betriebsstoffen gewährleistet werden.

Zudem ist es bekannt, verdampftes Flüssigerdgas aus einem Speicher in dem Gasmotor direkt für die Verbrennung zu verwenden, wobei hierzu in einen Zylinder komprimierte Luft und das verdampfte Flüssigerdgas zur Verbrennung gefördert werden. Um eine höhere Leistung zu erreichen und/oder die Verbrennung zu optimieren, beispielsweise durch Vermeidung einer nachteiligen Vorzündung des Gemischs aus komprimierter Luft und des verdampften Flüssigerdgases, wird die komprimierte Luft vor der Zuführung in den Zylinder gekühlt, was jedoch energetisch aufwendig ist.

Aufgabe der Erfindung ist daher, die Nachteile des Bekannten zu vermeiden, insbesondere also eine Kühleinrichtung, eine Hubkolbenbrennkraftmaschine, ein Schiff und ein Kühlverfahren zur Kühlung der Hubkolbenbrennkraftmaschine bereitzustellen, das einen wirtschaftlicheren Umgang mit den Brenn- und Betriebsstoffen gewährleistet und das Risiko einer Vorzündung verringert.

Diese Aufgaben werden durch die Kühleinrichtung, die Hubkolbenbrennkraftmaschine, das Schiff und das Kühlverfahren gemäss den unabhängigen Ansprüchen gelöst.

Die abhängigen Ansprüche beziehen sich auf besonders vorteilhafte Ausführungsformen der Erfindung.

Die Erfindung betrifft eine Kühleinrichtung für eine Hubkolbenbrennkraftmaschine. Die Hubkolbenbrennkraftmaschine ist geeignet zum Betrieb mit zumindest einem Gas; bei einem derartigen Gas kann es sich beispielsweise um Flüssigerdgas oder auch andere brennbare Gase handeln. Die Kühleinrichtung umfasst einen Speicher für verflüssigtes Gas, insbesondere Flüssigerdgas. Zudem umfasst die Kühleinrichtung eine Fördereinrichtung zum Fördern des verflüssigten Gases aus dem Speicher. Die Fördereinrichtung ist insbesondere als eine Pumpe ausgebildet. Die Kühleinrichtung umfasst einen ersten Wärmetauscher, in den das verflüssigte Gas und ein Kühlfluid förderbar sind. In dem ersten Wärmetauscher ist das Kühlfluid zum Kühlen der Hubkolbenbrennkraftmaschine mittels des verflüssigten Gases abkühlbar. Das verflüssigte Gas ist auf eine Zufuhrtemperatur mittels des Kühlfluids erwärmbar, derart, dass das verflüssigte Gas in das zumindest eine Gas umwandelbar und in die Hubkolbenbrennkraftmaschine förderbar ist; mit anderen Worten erfolgt ein Phasenübergang von flüssig zu gasförmig, d.h. vom verflüssigten Gas in das zumindest eine Gas.

Dies hat den Vorteil, dass das Kühlfluid während der Erwärmung des verflüssigten Gases für die weitere Verwendung zum Kühlen der Hubkolbenbrennkraftmaschine weiter abkühlbar ist, ohne dass eine weitere Kühleinrichtung notwendig ist. Zudem kann gegenüber aus dem Stand der Technik bekannten Luftkühlungseinrichtungen eine tiefere Temperatur des Kühlfluids erreicht werden, was eine höhere Leistung der Hubkolbenbrennkraftmaschine ermöglicht und/oder einen noch sichereren Betrieb durch die Verringerung des Risikos einer Vorzündung gewährleistet. Eine höhere Leistung kann z.B. dadurch erreicht werden, dass mehr Gas pro Verbrennungszyklus in den Zylinder der Hubkolbenbrennkraftmaschine gefördert werden kann gegenüber dem Stand der Technik, ohne das Risiko der Vorzündung zu erhöhen.

Ein Speicher für verflüssigtes Gas kann im Sinne der Anmeldung ein Reservoir, ein Tank oder auch ein Leitungsnetzwerk sein.

Unter einem verflüssigten Gas wird im Sinne der Anmeldung verstanden, dass dieses sich im Wesentlichen aufgrund der Temperatur des Gases im flüssigen Aggregatzustand befindet. Üblicherweise liegt Erdgas als verflüssigtes Erdgas bei einer Temperatur im Bereich von -162°C bis -164°C vor und wird in diesem Temperaturbereich gelagert.

Bevorzugt ist der Speicher als Tank mit zumindest einer Seitenwand und zumindest einem Boden ausgebildet. Der Tank weist eine maximale Füllhöhe für das verflüssigte Gas auf. In einem dem Boden des Tanks zugewandten Bereich ist zumindest eine Förderleitung in der Seitenwand angeordnet zum Abführen des verflüssigten Gases durch die Seitenwand.

Bevorzugt überstreicht der dem Boden des Tanks zugewandte Bereich höchsten 50 % der maximalen Füllhöhe des Tanks. Bevorzugt überstreicht der Bereich höchsten 25% und besonders bevorzugt höchsten 10%.

Dies hat den Vorteil, dass im Betrieb gewährleistet werden kann, dass im Wesentlichen verflüssigtes Gas, welches eine entsprechend tiefe Temperatur aufweist, in den Wärmetauscher gefördert wird, auch wenn der Füllstand an verflüssigtem Gas während des Betriebs sinkt.

Bevorzugt ist die Förderleitung in dem Boden angeordnet zum Abführen des verflüssigten Gases durch den Boden. Besonders bevorzugt ist der Boden zur Förderleitung hin zulaufend ausgebildet.

Dies hat den Vorteil, dass im Betrieb gegenüber einer Anordnung der Förderleitung in der Seitenwand noch besser gewährleistet werden kann, dass im Wesentlichen verflüssigtes Gas in den Wärmetauscher gefördert wird.

Bevorzugt sind am Tank zumindest zwei Förderleitungen auf unterschiedlichen Positionen angeordnet. Eine Verwendung einer oder mehrerer Förderleitungen zum Fördern des verflüssigten Gases ist steuerbar und/oder regelbar. Die Steuerung und/oder Regelung erfolgt insbesondere in Abhängigkeit von einem Sensorsignal.

Bevorzugt ist am und/oder im Speicher zumindest ein Sensor angeordnet zur Bestimmung der Füllhöhe im Speicher und/oder einer Temperatur. Insbesondere ist ein Temperaturgradient im Speicher in Abhängigkeit von der Füllhöhe bestimmbar. Selbstverständlich ist es auch denkbar, dass mittels des Sensors alternativ oder zusätzlich ein Druck und insbesondere ein Druckgradient im Speicher bestimmbar sind.

Dies hat den Vorteil, dass beispielsweise bei Auftreten eines Temperatur- oder Druckgradienten über die Füllhöhe des verflüssigten Gases die entsprechende angeordnete Förderleitung wählbar ist für die Zuführung des verflüssigten Gases in den Wärmetauscher. Hierdurch kann erreicht werden, dass das verflüssigte Gas mit den Parametern wie Temperatur und/oder dem Druck in den Wärmetauscher gefördert wird, bezüglich denen ein optimaler Betrieb gewährleistet werden kann.

Bevorzugt ist ein zweiter Wärmetauscher derart angeordnet, dass zumindest ein Treibstoffbestandteil für die Hubkolbenbrennkraftmaschine mittels des Kühlfluids im zweiten Wärmetauscher kühlbar ist. Insbesondere ist der Treibstoffbestandteil komprimierte Luft.

Bevorzugt ist das Kühlfluid stromabwärts des zweiten Wärmetauschers in den ersten Wärmetauscher förderbar, wobei das Kühlfluid stromabwärts des ersten Wärmetauschers wieder in den zweiten Wärmetauscher förderbar ist. Mit anderen Worten kann das Kühlfluid in einem Kreislaufbetrieb gefördert werden.

Die Förderung des Kühlfluids insbesondere im Kreislaufbetrieb hat den Vorteil, dass ein notwendiges Volumen an Kühlfluid minimiert werden kann. Dies hat den weiteren Vorteil, dass die Kühlung des Kühlfluids und des Treibstoffbestandteils gut kontrollierbar ist. Zudem wird auch eine gegebenenfalls notwendige Entsorgung beispielsweise nach einer Kontaminierung des Kühlfluids kostengünstiger, da lediglich geringe Mengen an Kühlfluid entsorgt werden müssen.

Ein weiterer Aspekt der vorliegenden Erfindung betrifft eine Hubkolbenbrennkraftmaschine umfassend eine Kühleinrichtung wie oben beschrieben.

Bevorzugt ist die Hubkolbenbrennkraftmaschine als Treibstoff mit Diesel und/oder dem zumindest einen Gas betreibbar. Dies hat den Vorteil, dass in Abhängigkeit von den Anforderungen an die Emissionen der Hubkolbenbrennkraftmaschine der wirtschaftlich optimale Treibstoff verwendbar ist und dass lediglich eine Hubkolbenbrennkraftmaschine dafür bereitgestellt werden muss. Dies ist insbesondere bei einer Verwendung der Hubkolbenbrennkraftmaschine in einem Schiff vorteilhaft, da ja wie bekannt für Schiffe unterschiedliche Emissionszonen definiert sind, wobei beispielsweise in einer Hafenzone oder Küstenzone geringere Emissionen gefordert werden; in diesen Emissionszonen erfolgt dann bevorzugt eine Verwendung von verflüssigtem Erdgas, wobei ausserhalb dieser Zonen bevorzugt Diesel verwendet wird.

Bevorzugt ist die Hubkolbenbrennkraftmaschine ein längsgespülter Zweitakt Grossdieselmotor.

Ein zusätzlicher Aspekt der vorliegenden Erfindung betrifft ein Schiff umfassend eine Hubkolbenbrennkraftmaschine wie oben beschrieben.

Ein weiterer Aspekt der vorliegenden Erfindung betrifft ein Kühlverfahren zur Kühlung einer Hubkolbenbrennkraftmaschine. Insbesondere wird eine Hubkolbenbrennkraftmaschine wie oben beschrieben verwendet. Die Hubkolbenbrennkraftmaschine umfasst eine Kühleinrichtung, wobei die Kühleinrichtung insbesondere wie oben beschrieben ausgebildet ist. Die Kühleinrichtung umfasst einen Speicher für verflüssigtes Gas, eine Fördereinrichtung zum Fördern des verflüssigten Gases aus dem Speicher und einen ersten Wärmetauscher. Das Verfahren umfasst die folgenden Schritte:
- Zuführen von Kühlfluid der Hubkolbenbrennkraftmaschine in den ersten Wärmetauscher;
- Fördern von verflüssigtem Gas aus dem Speicher in den ersten Wärmetauscher;
- Erwärmen des verflüssigten Gases auf eine Zufuhrtemperatur mittels des Kühlfluids, wobei das verflüssigte Gas in einen gasförmigen Zustand übergeht und anschliessend in die Hubkolbenbrennkraftmaschine gefördert wird;
- Abkühlen des Kühlfluids durch das verflüssigte Gas und Fördern des Kühlfluids in eine Vorrichtung zum Kühlen zumindest eines Treibstoffbestandteils der Hubkolbenbrennkraftmaschine.

Dies hat den Vorteil, dass die Leistung der Hubkolbenbrennkraftmaschine erhöht werden kann durch eine bessere Kühlung eines Treibstoffbestandteils, bei dem es sich beispielsweise um komprimierte Luft handelt; üblicherweise führt eine Verringerung der Temperatur der komprimierten Luft bei einer längsgespülten Zweitakt-Hubkolbenbrennkraftmaschine im Bereich von 0.5°C bis 2°C zu einer Erhöhung der Leistung im Bereich von 0.5% bis 2%; insbesondere führt eine Verringerung der Temperatur der komprimierten Luft bei einer längsgespülten Zweitakt-Hubkolbenbrennkraftmaschine von 1°C zu einer Erhöhung der Leistung von ca. 1 %.

Die erfindungsgemässen Verfahrensschritte können dabei in beliebiger Reihenfolge oder gegebenenfalls auch gleichzeitig durchgeführt werden, so lange der jeweilige Verfahrensschritt, der ja gegebenenfalls eine zumindest thermische Wechselwirkung von Kühlfluid und verflüssigtem Gas bedingt, durchführbar ist.

Bevorzugt ist die Vorrichtung zum Kühlen als zweiter Wärmetauscher ausgebildet, wobei als Treibstoffbestandteil komprimierte Luft verwendet wird. In einem Zylinder der Hubkolbenbrennkraftmaschine wird eine Verbrennung des Gases mit der komprimierten Luft durchgeführt, die in dem zweiten Wärmetauscher, der stromabwärts des ersten Wärmetauschers angeordnet ist, vor der Verbrennung mittels des Kühlfluids abgekühlt wird. Insbesondere erfolgt ein Kreislaufbetrieb für das Kühlfluid.

Weitere Merkmale und Vorteile der Erfindung werden nachfolgend anhand von Ausführungsbeispielen zum besseren Verständnis näher erläutert, ohne dass die Erfindung auf die Ausführungsbeispiele zu beschränken ist. Es zeigen:
- Fig. 1: Schematische Darstellung einer erfindungsgemässen Kühleinrichtung und einer Hubkolbenbrennkraftmaschine;
- Fig. 2: Vergrösserte Darstellung des Tanks gemäss Figur 1;
- Fig. 3: Schematische Darstellung eines alternativen Ausführungsbeispiels eines Tanks;
- Fig. 4: Schematische Darstellung eines weiteren alternativen Ausführungsbeispiels eines Tanks.

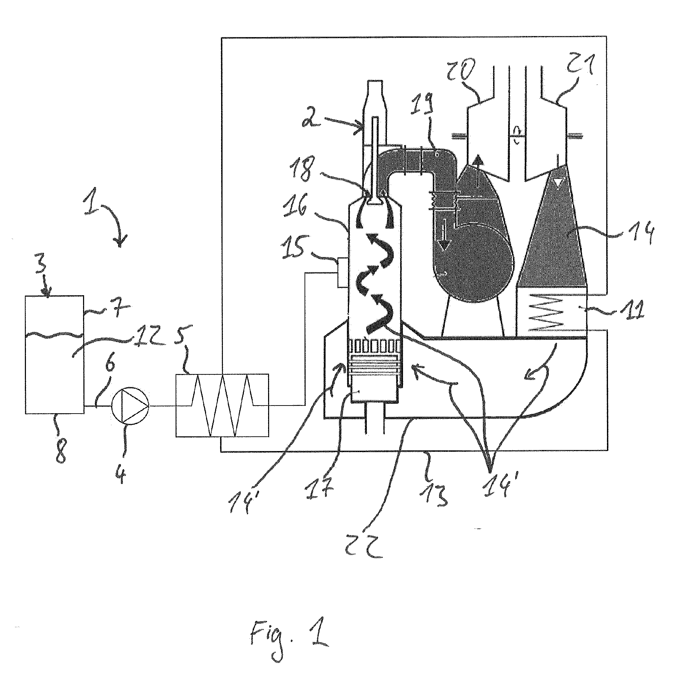

In Fig. 1 ist schematisch eine erfindungsgemässe Kühleinrichtung 1 und eine Hubkolbenbrennkraftmaschine 2 dargestellt. Die Hubkolbenbrennkraftmaschine 2 ist als längsgespülter Zweitakt-Motor ausgebildet.

Die Kühleinrichtung 1 umfasst als Speicher einen Tank 3 für Flüssigerdgas 12. Der Tank 3 weist einen Boden 8 und eine Seitenwand 7 auf, in der eine Förderleitung 6 angeordnet ist. Mittels einer Pumpe 4, die in Strömungsverbindung mit der Förderleitung 6 steht, kann Flüssigerdgas 12 in einen ersten Wärmetauscher 5 gefördert werden.

In dem ersten Wärmetauscher 5 wird das Flüssigerdgas 12, das bei einer Temperatur von -160°C bis -164°C gelagert wird, auf eine Temperatur von ca. 20°C erwärmt, wobei das Flüssigerdgas 12 seinen Aggregatzustand ändert und in ein Gas umgewandelt wird. Dieses Gas kann dann zum Gaseinlassventil 15 und anschliessend in einen Zylinder 16 gefördert werden. In dem Zylinder 16 kann dann eine Vermischung mit gekühlter, komprimierter Luft 14' erfolgen, wobei eine Verbrennung mittels eines Zündfunkens eingeleitet werden kann. Anschliessend wird das aus der Verbrennung entstehende Abgas über ein Auslassventil 18 und eine Auslasseinrichtung 19 einer Turbinenstufe 20 zugeführt.

Die für die Verbrennung als Treibstoffbestandteil verwendete komprimierte Luft 14 wird mittels eines Kompressors 21 bereitgestellt. Anschliessend an die Komprimierung weist die komprimierte Luft 14 eine hohe Temperatur auf, die beispielsweise etwa 225°C betragen kann. Für die Verbrennung im Zylinder 16 sollte die Temperatur jedoch tiefer liegen. Die komprimierte Luft 14 wird daher anschliessend an die Komprimierung durch einen zweiten Wärmetauscher 11 gefördert. In dem zweiten Wärmetauscher 11 erfolgt eine Abkühlung der komprimierten Luft 14 in gekühlte, komprimierte Luft 14', die anschliessend mittels der Einlasseinrichtung 22 in den Zylinder 16 gefördert wird. In dem Zylinder 16 ist wie bekannt ein Kolben 17 angeordnet, um das Gemisch aus gekühlter, komprimierter Luft 14' und Gas im Zylinder weiter zu verdichten für die Verbrennung.

Das Kühlfluid zur Abkühlung der komprimierten Luft 14 wird stromabwärts des zweiten Wärmetauschers 11 mittels der Kühlleitung 13 in den ersten Wärmetauscher 5 gefördert. In dem Wärmetauscher 5 erfolgt somit eine Erwärmung des Flüssigerdgases 12 auf eine Zufuhrtemperatur von ca. 20°C und eine Abkühlung des Kühlfluid. Vorliegend handelt es sich bei dem Kühlfluid im Wesentlichen um Wasser.

Im Betrieb wir das Kühlfluid entlang der Kühlleitung 13 im Kreislaufbetrieb vom zweiten Wärmetauscher 11 zum ersten Wärmetaucher 5 gefördert und anschliessend wieder zum zweiten Wärmetauscher 11. Eine Fördereinrichtung hierfür ist in der Fig. 1 nicht gezeigt.

Üblicherweise erfolgt im Stand der Technik die Abkühlung des Kühlfluids mittels einer Lufkühlung. Alternativ kann selbstverständlich auch eine Wasserkühlung verwendet werden. Mit einem derartig gekühlten Kühlfluid lässt sich in der Praxis im zweiten Wärmetauscher 11 eine Abkühlung der komprimierten Luft 14 auf ca. 45°C erreichen. Mittels der erfindungsgemässen Kühlung im ersten Wärmetauscher 5 unter Verwendung des Flüssigerdgases 12 lässt sich bei ansonsten gleichen Betriebsparametern eine Abkühlung der komprimierten Luft 14 auf ca. 35°C oder auch tiefere Temperaturen erreichen; hiermit lässt sich das Risiko einer Vorzündung weiter signifikant reduzieren und/oder eine höhere Leistung der Hubkolbenbrennmaschine 2 erreichen.

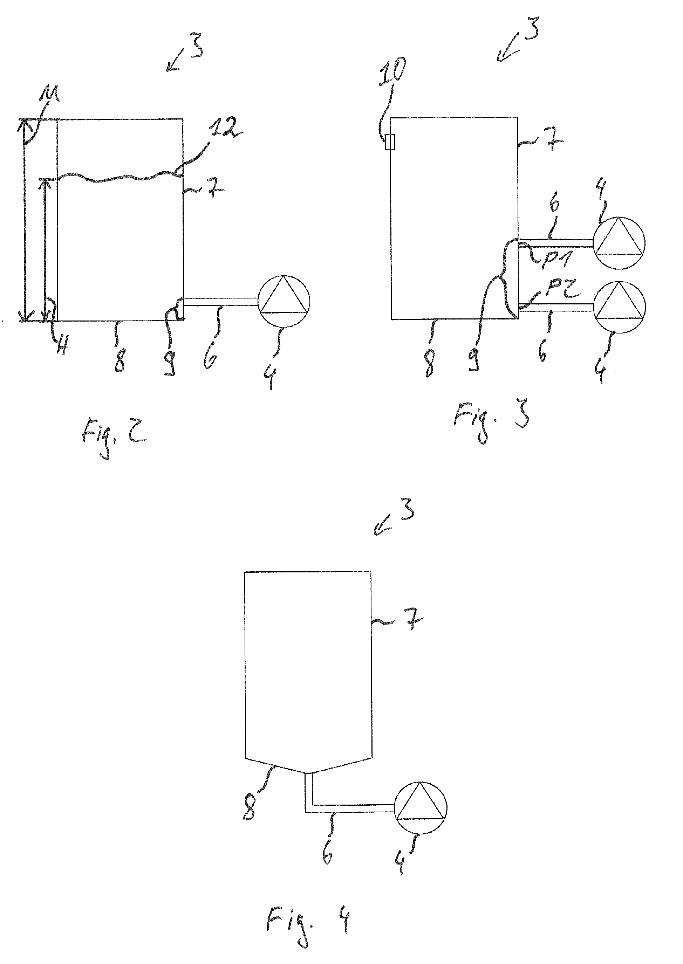

In Figur 2 ist der Tank 3 gemäss Figur 1 vergrössert dargestellt. Der Tank 3 weist eine maximale Füllhöhe M auf. In dem Tank 3 befindet sich Flüssigerdgas 12 mit einer Füllhöhe H.

Gleiche Referenzzeichen bezeichnen gleiche Merkmale in allen Figuren und werden nur bei Bedarf erneut erläutert.

Die Förderleitung 6 zum Fördern des Flüssigerdgases 12 aus dem Tank 3 mittels der Pumpe 4 ist in einem dem Boden 8 des Tanks 3 zugewandten Bereich 9 in der Seitenwand 7 angeordnet. Der Bereich 9 überstreicht ausgehend vom Boden 8 ca. 10% der maximalen Füllhöhe M.

Über der Oberfläche des Flüssigerdgases 12 im Tank 3, d.h. im Bereich zwischen der Füllhöhe H und der maximalen Füllhöhe M, befindet sich üblicherweise Verdampfungsverlust des Flüssigerdgases 12. Dieser Bereich enthält Erdgas im gasförmigen Zustand. Im Stand der Technik wird dieses gasförmige Erdgas üblicherweise für die Verbrennung im Zylinder verwendet, wobei die Abführung des Erdgases in diesem Fall bevorzugt auf der Oberseite des Tanks 3 abgeführt wird.

In Figur 3 ist schematisch ein alternatives Ausführungsbeispiel eines Tanks 3 dargestellt. In der Seitenwand 7 des Tanks 3 sind zwei Förderleitungen 6 an den Positionen P1 und P2 auf unterschiedlichen Höhen angeordnet. Zudem ist ein Sensor 10 vorgesehen zur Bestimmung der Füllhöhe an Flüssigerdgas. In Abhängigkeit von der gemessenen Füllhöhe kann die entsprechende Pumpe 4 verwendet werden, die mit den Förderleitungen 6 an den Positionen P1 oder P2 in Strömungsverbindung steht.

Selbstverständlich ist es auch denkbar, nur eine Pumpe 4 zu verwenden, wobei die Auswahl der Position P1 oder P2 mittels eines Ventils erfolgen kann.

Der Sensor 10 kann als Füllstandssensor, Temperatursensor, Drucksensor oder als beliebige Kombination aus diesen Sensoren ausgebildet sein. Gegebenenfalls ist es möglich, dass mittels des Sensors 10 ein Temperaturgradient im Tank 3 bestimmt wird und die Verwendung der Förderleitung an der Position P1 oder P2 basierend auf dem bestimmten Temperaturgradienten erfolgt.

In Figur 4 ist ein weiteres alternatives Ausführungsbeispiel eines Tanks 3 schematische dargestellt. Die Förderleitung 6 ist im Boden 8 des Tanks 3 angeordnet. Der Boden 8 ist zur Förderleitung 6 hin zulaufend ausgebildet.

## Patentansprüche

1. Kühleinrichtung (1) für eine Hubkolbenbrennkraftmaschine (2) geeignet zum Betrieb mit zumindest einem Gas, wobei die Kühleinrichtung (1) einen Speicher für verflüssigtes Gas, insbesondere Flüssigerdgas (12), umfasst, und wobei die Kühleinrichtung (1) eine Fördereinrichtung, insbesondere eine Pumpe (4), umfasst zum Fördern des verflüssigten Gases aus dem Speicher, **dadurch gekennzeichnet, dass** die Kühleinrichtung (1) einen ersten Wärmetauscher (5) umfasst, in den das verflüssigte Gas und ein Kühlfluid förderbar sind, wobei in dem ersten Wärmetauscher (5) das Kühlfluid zum Kühlen der Hubkolbenbrennkraftmaschine (2) mittels des verflüssigten Gases abkühlbar ist und das verflüssigte Gas auf eine Zufuhrtemperatur mittels des Kühlfluids erwärmbar ist, derart, dass das verflüssigte Gas in das zumindest eine Gas umwandelbar und in die Hubkolbenbrennkraftmaschine (2) förderbar ist.

2. Kühleinrichtung (1) gemäss Anspruch 1, **dadurch gekennzeichnet, dass** der Speicher als Tank (3) mit zumindest einer Seitenwand (7) und zumindest einem Boden (8) ausgebildet ist, wobei der Tank (3) eine maximale Füllhöhe (M) für das verflüssigte Gas aufweist, und wobei zumindest eine Förderleitung (6) in einem dem Boden (8) des Tanks (3) zugewandten Bereich (9) in der Seitenwand (7) angeordnet ist zum Abführen des verflüssigten Gases durch die Seitenwand (7).

3. Kühleinrichtung (1) gemäss Anspruch 2, **dadurch gekennzeichnet, dass** der dem Boden (8) des Tanks (3) zugewandte Bereich (9) höchsten 50 %, bevorzugt höchsten 25% und besonders bevorzugt höchsten 10% der maximale Füllhöhe (M) überstreicht.

4. Kühleinrichtung (1) gemäss einem der Ansprüche 1 bis 3, **dadurch gekennzeichnet, dass** die Förderleitung (6) in dem Boden (8) angeordnet ist zum Abführen des verflüssigten Gases durch den Boden (8).

5. Kühleinrichtung (1) gemäss Anspruch 4, **dadurch gekennzeichnet, dass** der Boden (8) zur Förderleitung (6) hin zulaufend ausgebildet ist.

6. Kühleinrichtung (1) gemäss einem der Ansprüche 2 bis 5, **dadurch gekennzeichnet, dass** am Tank (3) zumindest zwei Förderleitungen (6) an unterschiedlichen Positionen angeordnet sind, wobei eine Verwendung einer oder mehrerer Förderleitungen (6) steuerbar und/oder regelbar ist, insbesondere in Abhängigkeit von einem Sensorsignal.

7. Kühleinrichtung (1) gemäss einem der Ansprüche 1 bis 6, **dadurch gekennzeichnet, dass** am und/oder im Speicher zumindest ein Sensor (10) angeordnet ist zur Bestimmung der Füllhöhe (H) im Speicher und/oder einer Temperatur, insbesondere eines Temperaturgradienten im Speicher in Abhängigkeit von der Füllhöhe (H).

8. Kühleinrichtung (1) gemäss einem der Ansprüche 1 bis 7, **dadurch gekennzeichnet, dass** ein zweiter Wärmetauscher (11) derart angeordnet ist, dass zumindest ein Treibstoffbestandteil, insbesondere komprimierte Luft (14), für die Hubkolbenbrennkraftmaschine (2) mittels des Kühlfluids im zweiten Wärmetauscher (11) kühlbar ist.

9. Kühleinrichtung (1) gemäss Anspruch 8, **dadurch gekennzeichnet, dass** das Kühlfluid stromabwärts des zweiten Wärmetauschers (11) in den ersten Wärmetauscher (5) förderbar ist, wobei das Kühlfluid stromabwärts des ersten Wärmetauschers (5) wieder in den zweiten Wärmetauscher (11) förderbar ist.

10. Hubkolbenbrennkraftmaschine (2) umfassend eine Kühleinrichtung (1) gemäss einem der vorstehenden Ansprüche.

11. Hubkolbenbrennkraftmaschine (2) gemäss Anspruch 10, **dadurch gekennzeichnet, dass** die Hubkolbenbrennkraftmaschine (2) als Treibstoff mit Diesel und/oder brennbarem Gas betreibbar ist.

12. Hubkolbenbrennkraftmaschine (2) gemäss Anspruch 10 oder 11, **dadurch gekennzeichnet, dass** die Hubkolbenbrennkraftmaschine (2) ein längsgespülter Zweitakt Grossdieselmotor ist.

13. Schiff umfassend eine Hubkolbenbrennkraftmaschine (2) gemäss einem der Ansprüche 10 bis 12.

14. Kühlverfahren zur Kühlung einer Hubkolbenbrennkraftmaschine (2), insbesondere gemäss einem der Ansprüche 10 bis 12, wobei die Hubkolbenbrennkraftmaschine (2) eine Kühleinrichtung (1), insbesondere gemäss einem der Ansprüche 1 bis 9, umfasst, und wobei die Kühleinrichtung (1) einen Speicher für verflüssigtes Gas, eine Fördereinrichtung zum Fördern des verflüssigten Gases aus dem Speicher und einen ersten Wärmetauscher (5) umfasst, **gekennzeichnet durch** die folgenden Schritte:
- Zuführen von Kühlfluid der Hubkolbenbrennkraftmaschine (2) in den ersten Wärmetauscher (5);
- Fördern von verflüssigtem Gas aus dem Speicher in den ersten Wärmetauscher (5);
- Erwärmen des verflüssigten Gases auf eine Zufuhrtemperatur mittels des Kühlfluids, wobei das verflüssigte Gas in einen gasförmigen Zustand übergeht und anschliessend in die Hubkolbenbrennkraftmaschine (2) gefördert wird;
- Abkühlen des Kühlfluids **durch** das verflüssigte Gas und Fördern des Kühlfluids in eine Vorrichtung zum Kühlen zumindest eines Treibstoffbestandteils der Hubkolbenbrennkraftmaschine (2).

15. Kühlverfahren (2) gemäss Anspruch 14, **dadurch gekennzeichnet, dass** die Vorrichtung zum Kühlen als zweiter Wärmetauscher (11) ausgebildet ist und als Treibstoffbestandteil komprimierte Luft (14) verwendet wird, wobei in einem Zylinder (16) der Hubkolbenbrennkraftmaschine (2) eine Verbrennung des Gases mit gekühlter, komprimierten Luft (14') durchgeführt wird, die in dem zweiten Wärmetauscher (11), der stromabwärts des ersten Wärmetauschers (5) angeordnet ist, vor der Verbrennung mittels des Kühlfluids abgekühlt wird, wobei insbesondere ein Kreislaufbetrieb für das Kühlfluid erfolgt.
